# FASCICULE DE BREVET EUROPEEN

(11) **EP 1 300 697 B1**
(45) Date de publication et mention de la délivrance du brevet: **23.03.2011**
(21) Numéro de dépôt: 02292258.7
(22) Date de dépôt: 16.09.2002
(51) Int. Cl.: G01V 1/30

(54) **Méthode et dispositif pour la détection et le classement automatique suivant au moins un critère de sélection d'événements sismiques dans une formation souterraine**
Verfahren und Anordnung zur Detektion und automatischen Kategorisierung unterirdischer seismischer Ereignisse nach mindestens einem Auswahlkriterium
Method and arrangement for detection and automatic classification according to at least one selection criterium of subsurface seismic events

(30) Priorité: 05.10.2001 FR 0112893
(43) Date de publication de la demande: 09.04.2003
(73) Titulaire: Institut Français du Pétrole, 92852 Rueil-Malmaison Cedex (FR)
(72) Inventeur: Therond, Jean-Francois, 92200 Neuilly sur Seine (FR); Deflandre, Jean-Pierre, 95120 Ermont (FR); Grouffal, Christian, 92500 Rueil-Malmaison (FR)

(56) Documents cités:
- FR-A- 2 593 292
- FR-A- 2 772 137
- US-A- 3 949 353
- US-A- 4 649 524

## Description

La présente invention concerne une méthode pour le classement automatique suivant différents critères de sélection d'enregistrements d'événements sismiques ou micro-sismiques captés par des récepteurs sismiques couplés avec une formation souterraine en cours d'exploitation.

La méthode selon l'invention s'applique notamment à la surveillance de zones-réservoirs utilisées d'une façon générale soit pour en extraire des fluides, soit pour y injecter des fluides.

La localisation des points d'une zone souterraine qu'il s'agisse d'une zone-réservoir ou d'une cavité, où se produisent des événements micro-sismiques liés à une activité ayant pour effet de modifier le champ de contraintes, est d'un grand intérêt pour une bonne exploitation de la zone, qu'il s'agisse d'une production de fluides extraits d'un gisement par un ou plusieurs puits ou bien d'une injection de fluides dans la zone.

On peut par exemple surveiller l'évolution d'un gisement d'hydrocarbures en cours de production ou bien de sites géothermiques. Dans le cas de récupération assistée notamment, on cherche à balayer l'huile hors de la roche par des injections de fluides à des pressions et des températures pouvant être très différentes de celles du milieu. Les variations de contraintes qui en résultent peuvent induire une fracturation du milieu qui modifie les circulations des fluides à l'intérieur du gisement et qu'il est important de bien situer.

On connaît aussi des utilisations de gisements souterrains pour le stockage de fluides. Il peut s'agir par exemple de réservoirs de stockage en phase liquide ou gazeuse où il est possible de noter une certaine activité micro-sismique induite par des variations significatives du débit de liquide ou de gaz que l'on soutire de ces réservoirs ou que l'on y injecte.

Il peut s'agir aussi de zones-réservoirs ou cavités utilisées pour le stockage de déchets, qui doivent être surveillées dans le but de respecter l'environnement et de satisfaire aux réglementations de plus en plus contraignantes concernant la pollution. On peut utiliser un réservoir souterrain pour y injecter des fluides de forage plus ou moins chargés en particules solides, que la réglementation interdit de déverser après usage sur les sites de forages.

La température des fluides injectés est généralement très différente de celle du milieu à la profondeur où on les injecte, ce qui, si l'injection est massive, a pour effet de produire des contraintes thermiques génératrices de fractures avec pour conséquence une certaine activité sismique. La pression d'injection de ces boues peut également jouer pour créer des contraintes et entraîner des modifications plus ou moins importantes du milieu.

L'activité sismique induite par les effets de la pression ou de la température peut révéler par exemple la formation de fractures ou la sollicitation de fractures déjà existantes. Elles contribuent à modifier les voies d'écoulement des fluides à l'intérieur du milieu, ou bien elles créent des voies d'évasion de fluides hors du gisement, des ruptures de confinement avec possible pollution des zones voisines, notamment vers un aquifère exploité pour l'alimentation en eau potable qu'il importe de déceler.

La surveillance des gisements servant au stockage de déchets nucléaires pour éviter que les opérations d'injection où l'élévation de la température locale qui résulte du stockage, ne provoquent des ruptures dans les couches assurant le confinement est aussi d'une très grande importance.

Avec la surveillance micro-sismique encore appelée écoute sismique passive, le but à terme pour l'exploitant, est d'interpréter très rapidement les données en relation avec les données classiques d'exploitation (pression, débit, température, etc.) de sorte qu'il puisse prendre en compte la réponse mécanique du site dans le protocole d'exploitation afin de préserver la productivité du ou des puits voire du site. L'activité micro-sismique observée pouvant être associée à une dégradation mécanique du milieu pouvant engendrer des venues de solides, à l'ouverture de fractures pouvant mettre en communication le réservoir avec un aquifère ou à d'autres phénomènes d'origine thermo-poro-mécanique dont les conséquences peuvent induire une dégradation des performances des puits voire leur endommagement.

Par les brevets FR 2 593 292 (US 4 775 009); FR 2 681 573 (US 5 303 773) ou EP 546 892 (US 5 370 445) notamment, on connaît différentes techniques pour surveiller l'évolution au cours du temps de réservoirs souterrains comportant l'utilisation de capteurs sismiques ou autres installés à demeure dans un ou plusieurs puits (noyés dans le ciment couplant le cuvelage ou casing avec la formation ou bien encore associés extérieurement à un tubing de production et plaqués contre la face intérieure du casing), sans perturber les opérations diverses (production, injection, interventions diverses menées par l'intermédiaire de ces puits). L'installation de ces capteurs à demeure dans des puits, permet d'exercer une surveillance sismique d'un réservoir dans le but de détecter différents phénomènes liés à son exploitation.

Par les brevets FR 2 703 457, FR 2 703 470 ou EP 748 457 (US 5 724 311), on connaît des méthodes de surveillance active répétitive à long terme d'un réservoir par application d'ondes élastiques à une formation et acquisition des signaux réponses renvoyés par la formation, ceci au moyen d'une installation permanente de moyens d'émission et de réception dans des puits ou au voisinage de la surface du sol. On réalise des traitements différentiels sur des acquisitions opérées dans des conditions identiques.

Par les brevets FR FR 2 688 896, FR 2 689 647 (US 5 481 502) notamment, on connaît également des systèmes électroniques d'acquisition et de transmission étudiés spécialement pour collecter les signaux des capteurs permanents installés dans les puits extérieurement à des casings ou des colonnes d'exploitation, et les transmettre à un équipement d'enregistrement et de commande en surface, lors de campagnes de surveillance ou de sismique répétitive de longue durée.

Par la demande de brevet EP-A-1 074 858, FR 2 780 900 (US 6 113 388) on connaît également une méthode d'analyse automatique de signaux acquis par un ou plusieurs capteurs d'ondes élastiques ou acoustiques pour pointer automatiquement avec une grande précision sur eux, au moins un instant significatif tel que l'instant de première arrivée sur chaque capteur et/ou l'instant de fin de ces mêmes signaux.

Par le brevet FR 2 772 137 (US 6 049 508), on connaît également une méthode pour discriminer automatiquement parmi tous les événements enregistrés, ceux de type E qui présentent un intérêt pour la caractérisation du site, en faisant la part des événements induits au niveau de la complétion que l'on qualifie d'événements de type C. Ces événements sont générés par les arrêts et reprises d'injection, l'ouverture ou la fermeture de l'un des éléments de la complétion (vanne, packer etc.) pouvant être à des profondeurs quelconques dans le puits voire en surface (sur la tête de puits) et y compris au niveau de l'installation de surface (canalisations, appareils divers). Certaines de ces actions telle la mise en communication de la zone souterraine (réservoir) avec le réseau de surface, peuvent y induire du fait de variations de pression notamment, des événements de type E, souvent différés dans le temps et que l'on souhaite enregistrer et interpréter. Les événements de type C, qui peuvent être en très grand nombre sur un intervalle de temps relativement court (plus de 3400 événements en une semaine, pour donner un exemple pratique), nuisent à un suivi en temps réel des phénomènes géomécaniques induits au travers de l'acquisition des événements de type E dont le nombre sur une même période est souvent relativement faible (quelques dizaines par exemple).

Outre les récepteurs sismiques couplés avec la formation, on utilise un ou plusieurs capteurs de référence présentant un couplage acoustique direct avec des éléments de l'équipement technique d'exploitation de la zone pour la détection des ondes élastiques liées directement à l'exploitation. Par une analyse comparée des signaux issus de ces récepteurs et de chaque capteur de référence, on trie les enregistrements en différentes familles selon que les événements dans la zone souterraine sont indépendants des événements détectés par chaque capteur de référence ou en dépendent directement ou indirectement.

Par le brevet US 4 649 524 on connait également une méthode de surveillance d'instabilité dans une mine souterraine.

L'écoute systématique des événements microsismiques pouvant survenir dans une formation souterraine engendre, on l'a vu, une grande quantité d'enregistrements sismiques qu'il importe de classer avec le plus grand soin pour simplifier le travail ultérieur de discrimination et d'analyse.

### La méthode selon l'invention

La méthode selon l'invention permet le classement automatique suivant différents critères, des événements détectés sur des traces sismiques enregistrées correspondants à des signaux captés par des récepteurs sismiques couplés avec une formation souterraine, selon que les événements sont purement de nature microsismique ou dépendent à un titre quelconque d'artefacts liés à l'environnement extérieur ou à des activités d'exploitation ou de surveillance de la formation, et la sélection des parties significatives de traces à des fins d'analyse.

Elle est caractérisée essentiellement en ce qu'elle comporte la détection sur au moins une trace d'enregistrement durant une fenêtre de détection (Pld) et suivant au moins un critère, des signaux sismiques dépassant un certain seuil (Sd) relativement à une fonction de sélection définie (E, A), la sélection au moins sur la dite trace, d'une plage globale d'enregistrement (Ple) débordant de part et d'autre de la plage de détection (Pld), et la mémorisation des signaux de cette plage d'enregistrement (Ple) avec une étiquette de classement définie, selon que les signaux qui y ont été détectés correspondent purement à un événement microsismique ou sont liés dans une certaine mesure à des artefacts.

Suivant un mode de mise en oeuvre, la méthode comporte l'application d'un critère de sélection comprenant la détection d'événements sur une seule trace d'enregistrement (Tn) et la mémorisation de plages globales d'enregistrement correspondantes sur plusieurs traces.

Suivant un autre mode de mise en oeuvre, la méthode comporte l'application d'un critère de sélection comprenant la détection d'événements sur un certain nombre p (*p* ≥ 2) de traces d'enregistrement différentes (Tn, Tp) si les plages de détection correspondantes (Pld) sont comprises dans un laps de temps défini (Plg), par application d'une même fonction de sélection, et la mémorisation d'une plage globale d'enregistrement de durée suffisante pour recouvrir les événements, au moins sur les dites p traces.

Suivant un autre mode de mise en oeuvre, la méthode comporte l'application d'un critère de sélection comprenant la détection d'événements sur un certain nombre p ( *p* ≥ 2 ) de traces d'enregistrement différentes (Tn, Tp) si les plages de détection correspondantes (Pld) sont comprises dans un laps de temps défini (Plg), par application d'une même fonction de sélection, et la mémorisation d'une plage globale d'enregistrement de durée suffisante pour recouvrir les événements, sur un nombre N de traces supérieur au nombre p.

Suivant un autre mode de mise en oeuvre, lorsque l'une des dites p traces est produite par acquisition de signaux dus à des artefacts, la méthode comporte l'application d'un critère d'annulation comprenant le classement des autres traces où des événements sont détectés, dans la catégorie des traces annulées et leur mémorisation.

Suivant un autre mode de mise en oeuvre, la méthode comporte l'inhibition des traces pour lesquelles la durée de détection est supérieure à un intervalle de temps défini et leur revalidation ultérieure si la valeur de la fonction de sélection est inférieure à un deuxième seuil sur une plage de réactivation définie.

Les traces sismiques classées par la méthode sont obtenues au moyen de capteurs sismiques ou acoustiques couplés avec les formations environnant un puits au travers de la formation souterraine. Elles peuvent correspondre à des signaux renvoyés par la formation en réponse à l'émission dans le sol de signaux émis par une source sismique, et dans ce cas, on utilise de préférence des critères d'inhibition sur plusieurs traces pour ne sélectionner que des événements sismiques non provoqués par la dite source.

Le dispositif de traitement de données selon l'invention permet de classer automatiquement suivant différents critères, des événements détectés sur des traces sismiques enregistrées correspondants à des signaux captés par des récepteurs sismiques couplés avec une formation souterraine, selon que les événements sont purement de nature microsismique ou dépendent à un titre quelconque d'artefacts liés à l'environnement extérieur ou à des activités d'exploitation ou de surveillance de la formation, et pour sélectionner des parties significatives de traces à des fins d'analyse. Il comporte essentiellement des moyens pour détecter sur au moins une trace d'enregistrement durant une fenêtre de détection et suivant au moins un critère, des signaux sismiques dépassant un certain seuil relativement à une fonction de sélection définie, des moyens de sélection au moins sur la dite trace, d'une plage globale d'enregistrement débordant de part et d'autre de la plage de détection, et des moyens de mémorisation des signaux de cette plage d'enregistrement avec une étiquette de classement définie, selon que les signaux qui y ont été détectés correspondent purement à un événement microsismique ou sont liés dans une certaine mesure à des artefacts.

Le dispositif de surveillance sismique d'une formation souterraine selon l'invention comporte essentiellement une pluralité de récepteurs sismiques couplés avec la formation, un ensemble d'enregistrement des signaux captés par les différents récepteurs sismiques et l'ensemble de traitement défini ci-dessus.

Les récepteurs sismiques sont par exemple des hydrophones et/ou des géophones et/ou ou des accéléromètres répartis dans au moins un puits au travers de la formation que l'on peut coupler avec la formation par un liquide ou du ciment, des moyens de couplage mécaniques ou par aimantation.

Le dispositif peut comporter au moins un câble de transmission reliant les récepteurs sismiques à l'ensemble d'enregistrement.

Les moyens de réception et/ou de transmission de données utilisent par exemple une technologie à base de fibres optiques.

Le dispositif peut comporter des moyens d'inhibition de plusieurs traces d'enregistrement pour ne sélectionner que des événements sismiques non provoqués par la dite source ou éviter la saturation de l'ensemble d'enregistrement.

Par l'utilisation de ces protocoles de détection et de classement, la méthode et le dispositif permettent d'isoler parmi la quantité souvent considérable de fichiers d'enregistrement obtenus par une écoute systématique de la microsismicité d'une formation, des fichiers en nombre beaucoup plus restreint d'enregistrements significatifs datés et classés, directement interprétables.

On évite ainsi la saturation inutile des capacités de stockage des données et on accroît l'autonomie effective du dispositif de traitement des événements sismiques, dont les capacités à fonctionner de manière autonome ou indépendante, constituent un atout important.

La possibilité de fonctionner suivant plusieurs modes simultanément, confère au dispositif de traitement des avantages certains pour la gestion de sites étendus où les zones sous serveillance peuvent subir des réajustements mécaniques non perceptibles forcément d'une zone à une autre.

La possibilité d'inhiber temporairement et de manière automatique, des détections continues sur certains récepteurs sismiques, utilisée conjointement avec un fonctionnement exploitant plusieurs modes de détection/inhibition, permet notamment de ne perdre aucune information utile qui serait acquise par certains voies de réception écoutées seulement par intermittence ou par ces mêmes voies lorsqu'elles satisfont les critères de réactivation.

### Présentation sommaire des figures

D'autres caractéristiques et avantages de la méthode selon l'invention, apparaîtront à la lecture de la description ci-après d'un exemple non limitatif de réalisation, en se référant aux dessins annexés où :
- la Fig.1 montre schématiquement un puits équipé de récepteurs pour l'écoute sismique d'une formation ;
- la Fig.2 montre schématiquement un mode de fixation de récepteurs sismiques à un tubing ;
- la Fig.3 illustre le critère appliqué à la détection d'une seule trace ;
- la Fig.4 illustre une variante de ce même critère permettant de séparer les événements successifs ;
- la Fig.5 illustre le critère appliqué à la détection appliqué à plusieurs traces ; et
- la Fig.6 illustre le critère d'inhibition et de réactivation de traces permettant le rejet de traces trop bruitées.

### DESCRIPTION DETAILLEE

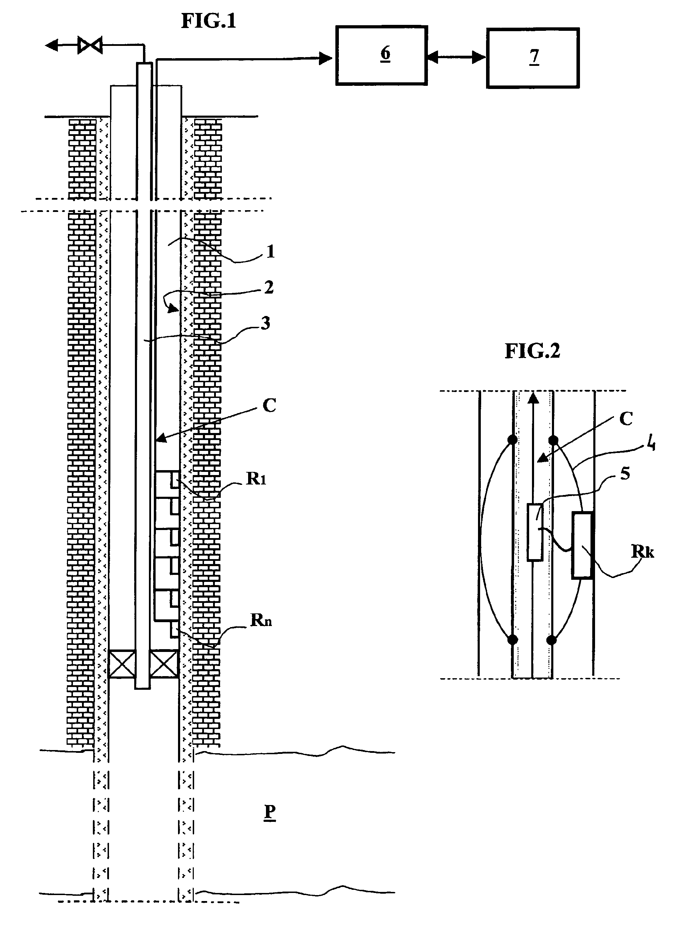

Le système de surveillance sismique ou microsismique schématisé à la Fig. 1, est installé dans un ou plusieurs puits 1 pourvus chacun d'un tube de cuvelage ou casing 2 qui, une fois en place est couplé avec les terrains environnants par une injection de ciment entre lui et le puits. Dans le puits cuvelé est descendu une colonne de production ou tubing 3. Au moyen de cette colonne, on intervient sur une zone souterraine P (pour en extraire des fluides ou pour en injecter). Des moyens de pompage et des vannes (non représentés) permettent l'activation contrôlée de la zone considérée. Le système de surveillance sismique comporte par exemple dans chaque puits un ensemble de n récepteurs sismiques R1 à Rn fixés à l'extérieur du tubing que l'on plaque contre la paroi intérieure du casing 2 par l'intermédiaire de moyens de découplage tels que des éléments flexibles 4 (Fig.2). Il peut aussi comporter des récepteurs.

Chacun de ces récepteurs Rk est par exemple un « triphone» comprenant trois géophones dans un même boîtier, dont les axes sont orientés suivant les directions d'un trièdre trirectangle. Des boîtiers électroniques locaux 5 sont disposés dans le puits. Chacun d'eux est connecté chacun à un ou plusieurs triphones Rk, pour acquérir les signaux captés par les récepteurs associés. Les différents boîtiers électroniques locaux sont connectés par un ou plusieurs câbles de transmission C à un ensemble de collecte en surface 6 tel qu'un micro-ordinateur. Dans le cas où des récepteurs sont installés à demeure dans plusieurs puits, distants les uns des autres, on réunit par exemple les différents ensembles de collecte 6 à un laboratoire central distant (non représenté) au moyen d'un réseau de communication tel que par exemple un réseau Ethernet, comme décrit par exemple dans les brevets FR 2 772 137, FR 2 689 647 (US 5 481 502) précités. Un système de télémétrie multiniveaux multipuits, peut comporter par exemple jusqu'à neuf ou dix-huit niveaux de trois traces par liaison télémétrique installée dans un même puits et jusqu'à dix puits équipés.

Dans le cas où une seule liaison télémétrique est utilisée par puits, une session d'écoute peut être lancée depuis chaque ensemble de surface ou le laboratoire central par l'émission d'un signal d'activation. Une fois par jour ou à l'initiative de l'opérateur, l'écoute est interrompue et un ensemble de tests est effectué selon le protocole qui va être décrit ci-après, pour localiser sur les enregistrements, les événements sismiques notables qui se sont produits durant la session d'écoute, les classer et les consigner dans le journal; puis l'écoute est relancée.

### Configuration d'écoute

Cette action permet de sélectionner, à partir de la configuration d'équipement du site, la configuration d'écoute i.e. l'ensemble des traces d'enregistrement (traces dites « d'écoute ») qui vont participer à l'écoute durant la session.

Cette étape étant exécutée l'opérateur peut passer à la définition de la configuration d'acquisition.

### DEFINITION DES CRITERES DE DETECTION

Cette opération est celle qui permet à l'opérateur de définir les critères de détection des événements microsismiques et l'ensemble des traces d'écoute sur lesquelles ils seront appliqués. Pour cela il faut définir un certain nombre de types de traces parmi les traces d'écoute :
- les traces « détectrices » sur lesquelles les critères sont appliqués ;
- les traces à enregistrer qui seront enregistrées sur chaque critère ; et
- les traces d'annulation qui vont permettre de confirmer ou d'infirmer qu'un événement détecté sur une ou des traces détectrices est un événement microsismique.

Si un événement microsismique est détecté, tous les signaux numérisés sur toutes les traces à enregistrer à des instants encadrant l'événement sont datés et stockés sur le disque du micro-ordinateur d'acquisition. Le journal est également mis à jour.

Par définition, un critère est une fonction d'analyse à appliquer sur une ou plusieurs traces dans une tranche de temps donnée.

Il s'agit par exemple d'une fonction "énergie" E(Tn, Pld, Sd). Cette fonction calcule la valeur efficace du signal de la trace Tn sur une plage Pld et compare le résultat à un seuil Sd. S'il y a dépassement de seuil, la fonction renvoie le booléen VRAI ; sinon elle renvoie FAUX. La valeur efficace est calculée en retirant à chaque échantillon la composante continue calculée sur la plage Pld.

Il peut s'agir encore de la fonction "amplitude" A(Tn, Pld, Sd, X). Cette fonction calcule la valeur absolue du signal de la trace Tn sur une plage Pld et compare le nombre de dépassements du seuil Sd par rapport au nombre X passé en paramètre. S'il y a dépassement de seuil, la fonction renvoie le booléen VRAI ; sinon elle renvoie FAUX.

Nous allons passer en revue un certain nombre de critères de détection d'événements puis des critères d'annulation d'événements et enfin une procédure permettant d'inhiber une trace détectrice bruitée.

### LIMITES D'ENREGISTREMENT

Pour éviter une saturation du disque de stockage, on peut décider par exemple d'enregistrer seulement 50% des événements sur une heure et 10% sur une journée. Cette limitation peut être enlevée pour certaines opérations du type écoute en cours de fracturation. En écoute permanente, une sauvegarde automatique de tous les événements est effectuée à intervalles réguliers (sur un disque optique toutes les 24 heures par exemple). Cette sauvegarde peut également être effectuée sur demande de l'opérateur.

### DIFFERENTS CRITERES DE DETECTION

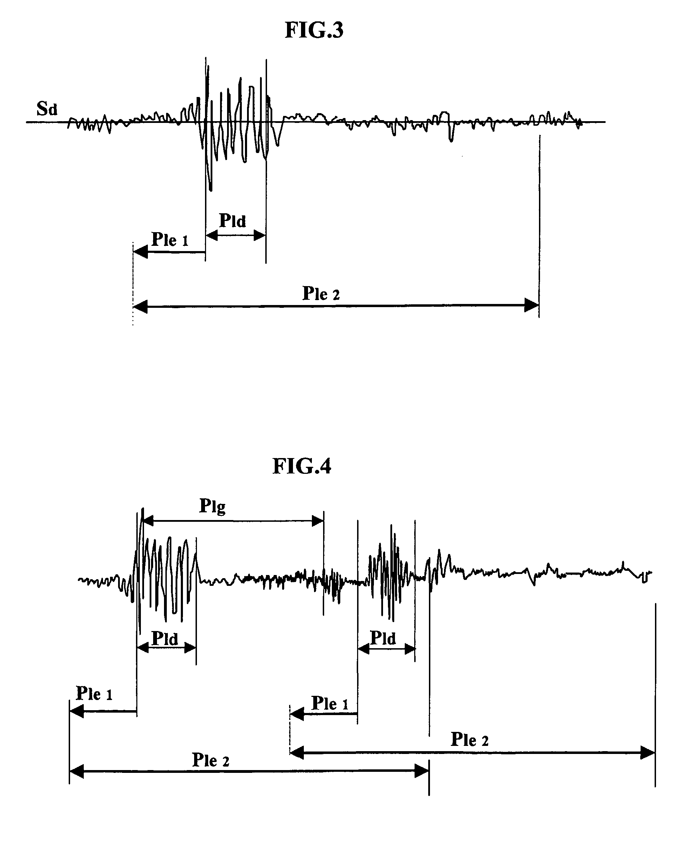

### Principe du critère appliqué à une seule trace TN(FIG.3, 4)

Ce critère permet de détecter qu'un événement est un événement microsismique. Pour une trace Tn, le critère peut être formulé ainsi : un événement détecté devient microsismique si le résultat de la fonction appliquée sur la plage Pld (plage de détection) dépasse le seuil Sd. L'événement détecté provoque l'enregistrement de toutes les traces à enregistrer associées à ce critère. Cet enregistrement débute sur les échantillons acquis du début de la plage Pld moins une plage Ple1 (Plage d'enregistrement avant) et porte sur une plage Ple2 (plage totale d'enregistrement). Pour la détection du seuil la plage Pld progresse à chaque fois d'une demi plage.

Si une nouvelle détection intervient avant la fin d'une plage Plg (plage globale d'événement), on considère qu'il s'agit du même événement microsismique. Par contre toute nouvelle détection au-delà de Plg est considérée comme un autre événement microsismique et donne lieu à un enregistrement.

Toutes les traces enregistrées ont une taille Ple de quelques dizaines de millisecondes jusqu'à une ou plusieurs secondes par exemple. Dans le cas ci-dessus, il y a un recouvrement des enregistrements.

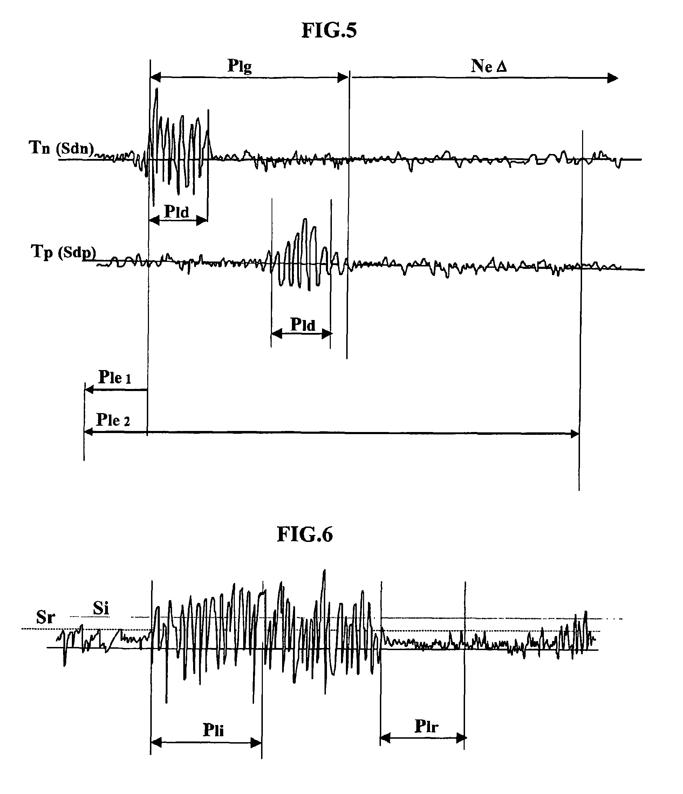

### Principe du critère de détection multitraces (Fig.5)

Ce type de critère permet de confirmer de façon plus fine qu'un événement est bien microsismique. Les traces sur lesquelles s'appliquent ces critères sont obtenues dans un même puits ou dans des puits différents. Pour deux traces Tn et Tp, le critère peut être formulé ainsi :

L'événement détecté devient microsismique si dans une plage globale Plg, la valeur efficace de Tn sur une plage Pld dépasse le seuil Sdn ET la valeur efficace de Tp sur une plage Pld dépasse le seuil Sdp. L'événement détecté provoque l'enregistrement de toutes les traces à enregistrer associées à ce critère. Cet enregistrement débute sur les échantillons acquis au début de la plage Pldn moins une plage Ple1 et porte sur une plage Ple2.

Si le critère est de nouveau satisfait avant la fin de la plage Plg, l'on considère qu'il s'agit du même événement microsismique. Par contre toute nouvelle détection au-delà de Plg est considérée comme un autre événement microsismique Nes et donne lieu à un enregistrement.

Ce critère peut concerner plus de deux traces et, la validation peut avoir lieu soit :
- si N traces détectrices satisfont au critère dans une plage globale Plg, ou
- si N traces parmi les traces détectrices au moins satisfont au critère dans une plage globale Plg.

### TYPES DE CRITERE ET PARAMETRAGE

### Paramétrage par trace

Pour chaque trace détectrice, on définit les paramètres suivants :
- la fonction à appliquer E ou A ;
- le seuil de détection Sd ;
- le seuil d'inhibition Si ;
- le seuil de réactivation de la trace Sr
- le nombre de dépassement X (si la fonction sélectionnée est "amplitude").

### Critère portant sur N traces détectrices spécifiques ( Critère Ca)

Ce type de critère est satisfait si le résultat de toutes les fonctions effectuées sur toutes les traces détectrices spécifiées retourne le booléen VRAI dans une plage de temps donnée. Ce qui revient à une opération logique ET entre tous les résultats de fonction.

Pour paramétrer ce critère (Ca) il faut fournir les paramètres suivants :
- liste des traces détectrices attachées à ce critère ;
- plage de limite de détection (Plg) ;
- plage de calcul de détection (Pld) ;
- liste des traces d'enregistrement attachées à ce critère ;
- plage avant d'enregistrement (Ple1) ; et
- durée d'enregistrement (Ple2).

Dans une session d'écoute l'opérateur peut définir plusieurs critères de type Ca avec des paramètres différents ( Ca1, Ca2, etc.).

### Critère portant sur N traces détectrices parmi P ( Critère Cb )

Ce type de critère est satisfait si le résultat d'au moins N fonctions effectuées sur toutes les traces détectrices spécifiées retourne le booléen VRAI dans une plage de temps donnée.

Pour paramétrer ce critère (Cb) il faut fournir les paramètres suivants :
- liste des traces détectrices attachées à ce critère ;
- nombre de traces devant satisfaire au critère ;
- liste des traces d'enregistrement attachées à ce critère ;
- plage de limite de détection (Plg) ;
- plage de calcul de détection (Pld) ;
- plage avant d'enregistrement (Ple1) ; et
- durée d'enregistrement (Ple2).

Dans une session d'écoute l'opérateur peut définir plusieurs critères de type Cb avec des paramètres différents ( Cb1, Cb2, etc).

### Critère portant sur une seule trace détectrice ( Critère Cc )

Ce critère est satisfait si le résultat de la fonction effectuée sur une des traces spécifiées retourne le booléen VRAI. Ce qui revient à une opération logique OU entre tous les résultats des fonctions associées aux traces spécifiées.

Pour paramétrer ce critère (Cc) il faut fournir les paramètres suivants :
- numéro de la ou des traces détectrices ;
- plage de limite de détection (Plg) ;
- plage de calcul de détection (Pld) ;
- liste des traces d'enregistrement attachées à ce critère ;
- plage avant d'enregistrement (Ple1) ; et
- durée d'enregistrement (Ple2).

Dans une session d'écoute, l'opérateur peut définir plusieurs critères de type Cc avec des paramètres différents (Cc1 Cc2, etc.). Il peut également donner une liste de traces détectrices utilisant les mêmes paramètres.

### CRITERE D'ANNULATION D'EVENEMENT (CS)

Au moment de la définition d'un critère de détection un certain nombre de traces sont sélectionnées pour être des traces d'annulation. Ces traces sont en général les traces de surface ou les traces tubing. En cas d'annulation du critère de détection seul les traces d'annulation seront enregistrées. Ce critère d'annulation est utilisé pour détecter un bruit de surface provoqué par des travaux ou autre.

Pour paramétrer ce critère (Cs) il faut fournir les paramètres suivants :
Numéro de la trace de surface (Ts) ou de tubing (Tb) ;
Plage de calcul de détection (Plad) ;
Plage d'annulation avant (Pla1) (valeur positive ou négative) ;
Plage totale d'annulation (Pla2) ;
Plage avant d'enregistrement (Plea1) ; et
Durée d'enregistrement (Plea2).

Si le critère d'annulation est déclenché la détection du critère associé est annulée durant la plage Plea2.

### CRITERE D'INHIBITION ET DE REACTIVATION D'UNE TRACE ( C_{I}) (FIG.6)

Ce critère permet de rendre inactive une trace détectrice trop bruitée.

Dans tous les cas, si une détection d'événement sur une trace détectrice s'étale sur une plage supérieure à Pli ( Plage d'inhibition ), cette trace n'est plus prise en compte dans les critères de détection. Elle sera validée de nouveau si sa valeur efficace reste inférieure au seuil de réactivation (Sr) durant une plage Plr (plage de réactivation). Ce principe permet d'éliminer les événements non sismiques, voire des événements sismiques continus résultant de l'utilisation temporaire d'une source sismique à d'autres fins, telle qu'une acquisition sismique ponctuelle ou des acquisitions de même type effectués régulièrement.

Une trace inhibée est retirée de la liste des traces détectrices. Si elle participait à un critère de type Ca (ET), son déclenchement sera toujours considéré comme VRAI.

### Exemple pour une trace détectrice :

Si le niveau de bruit naturel est de 2 µVeff on pourra prendre :
Une plage de détection de 100 ms (Pld)
Un seuil de détection de 4µVeff (Si)
Une plage d'inhibition de 2 secondes(Pli)
Une plage de réactivation de 2 secondes (Plr)
Un seuil de réactivation de 3 µVeff pour réactiver la trace dans le critère ( Sr).

Pour paramétrer ce critère (Ci), il faut fournir les paramètres suivants :
- numéro des traces soumis à ce principe.
- plage d'inhibition (Pli)
- plage de réactivation (Plr).

Les seuils d'inhibition et de réactivation sont les seuils Si et Sr de chaque trace détectrice.

## Revendications

1. Méthode pour le classement automatique d'événements détectés sur des traces enregistrées correspondants à des signaux sismiques ou acoustiques captés par des récepteurs (R1 -Rn) couplés avec une formation souterraine, selon que lesdits événements sont purement de nature sismique ou microsismique ou dépendent à un titre quelconque d'artefacts liés à un environnement extérieur ou à des activités d'exploitation ou de surveillance de ladite formation souterraine, comportant : - une détection sur au moins une trace d'enregistrement durant une plage de détection (Pld) des signaux dépassant un certain seuil (Sd) lié à un critère de détection ; - une sélection d'une plage globale d'enregistrement (Ple) débordant de part et d'autre de ladite plage de détection (Pld) ; et - une mémorisation des signaux de cette plage d'enregistrement, **caractérisée en ce que** :
- on définit parmi l'ensemble desdites traces enregistrées, des traces détectrices, sur lesquelles on définit au moins un critère de détection des événements microsismiques, en définissant une fonction d'analyse (E, A) à appliquer sur ladite plage de détection (Pld), ladite fonction renvoyant une valeur calculée sur ladite plage de détection (Pld) ;
- on détecte un événement microsismique lorsque ladite valeur de ladite fonction (E, A) dépasse ledit seuil (Sd) ; et
- on réalise ladite mémorisation des signaux en associant à chacune des traces mémorisées une étiquette de classement définie selon que les signaux qui y ont été détectés correspondent purement à un événement sismique ou microsismique ou sont liés dans une certaine mesure à des artefacts.

2. Méthode selon la revendication 1, **caractérisée en ce qu'**elle comporte l'application d'un critère de détection comprenant la détection d'événements sur une seule trace d'enregistrement (Tn) et la mémorisation de plages globales d'enregistrement correspondantes sur plusieurs traces.

3. Méthode selon la revendication 1, **caractérisé en ce qu'**elle comporte l'application d'un critère de détection comprenant la détection d'événements sur un certain nombre p (*p* ≥ 2) de traces d'enregistrement différentes (Tn, Tp) si les plages de détection correspondantes (Pld) sont comprises dans un laps de temps défini (Plg), par application d'une même fonction d'analysé, et la mémorisation d'une plage globale d'enregistrement de durée suffisante pour recouvrir les événements, au moins sur les dites p traces.

4. Méthode selon la revendication 1, **caractérisé en ce qu'**elle comporte l'application d'un critère de détection comprenant la détection d'événements sur un certain nombre p (*p* ≥ 2) de traces d'enregistrement différentes (Tn, Tp) si les plages de détection correspondantes (Pld) sont comprises dans un laps de temps défini (Plg), par application d'une même fonction d'analyse, et la mémorisation d'une plage globale d'enregistrement de durée suffisante pour recouvrir les événements, sur un nombre N de traces supérieur au nombre p.

5. Méthode selon la revendication 3 **caractérisé en ce que** l'une des dites p traces étant produite par acquisition de signaux dus à des artefacts, elle comporte l'application d'un critère d'annulation comprenant le classement des autres traces où des événements sont détectés, dans la catégorie des traces annulées et leur mémorisation.

6. Méthode selon l'une des revendications précédentes, **caractérisée en ce qu'**elle comporte l'inhibition des traces pour lesquelles la durée de détection est supérieure à un intervalle de temps défini (Pli) et leur revalidation ultérieure si la valeur de la fonction d'analyse (E, A) est inférieure à un deuxième seuil sur une plage de réactivation définie (Plr).

7. Méthode selon l'une des revendications précédentes, **caractérisé en ce que** l'on utilise les traces sismiques obtenues au moyen de capteurs sismiques ou acoustiques couplés avec les formations environnant un puits au travers de la formation souterraine.

8. Méthode selon l'une des revendications précédentes, **caractérisé en ce que** l'on utilise plusieurs critères de détection choisis parmi tous les critères d'une bibliothèque de critères.

9. Méthode selon l'une des revendications précédentes, **caractérisé en ce que** les traces enregistrées sont les signaux renvoyés par la formation en réponse à l'émission dans le sol de signaux émis par une source sismique, et **en ce que** l'on utilise des critères d'inhibition sur plusieurs traces pour ne sélectionner que des événements sismiques non provoqués par la dite source.

10. Dispositif de traitement de données pour classer automatiquement suivant au moins un critère, des événements détectés sur des traces sismiques enregistrées correspondants à des signaux captés par des récepteurs sismiques ou acoustiques (Rk) couplés avec une formation souterraine, selon que les événements sont purement de nature microsismique ou dépendent à un titre quelconque d'artefacts liés à l'environnement extérieur ou à des activités d'exploitation ou de surveillance de la formation, et pour sélectionner des parties significatives de traces à des fins d'analyse, comportant un ensemble (6) d'enregistrement des traces sismiques et un ensemble de traitement des traces enregistrées, incluant des moyens de détection sur au moins une trace d'enregistrement durant une fenêtre de détection (Pld) et suivant au moins un critère de détection, des signaux dépassant un certain seuil, des moyens de sélection au moins sur la dite trace, d'une plage globale d'enregistrement (Ple) débordant de part et d'autre de la plage de détection (Pld), et des moyens de mémorisation des signaux de cette plage d'enregistrement, **caractérisé en ce que** l'ensemble de traitement (7) est adapté à :
- définir au moins un critère de détection des événements microsismiques sur des traces détectrices sélectionnées parmi l'ensemble desdites traces enregistrées, en définissant une fonction d'analyse (E, A) à appliquer sur ladite plage de détection (Pld), ladite fonction renvoyant une valeur calculée sur ladite plage de détection (Pld) ;
- détecter un événement microsismique lorsque ladite valeur de ladite fonction (E, A) dépasse ledit seuil (Sd) ; et
- mémoriser des signaux en associant à chacune des traces mémorisées une étiquette de classement définie selon que les signaux qui y ont été détectés correspondent purement à un événement sismique où microsismique ou sont liés dans une certaine mesure à des artefacts.

11. Dispositif selon la revendication 10, **caractérisé en ce que** les récepteurs sismiques sont des hydrophones ou des géophones ou des accéléromètres répartis dans au moins un puits au travers de la formation.

12. Dispositif selon la revendication 11, **caractérisé en ce que** les récepteurs sismiques sont couplés avec la formation par un liquide ou du ciment, des moyens de couplage mécaniques ou par aimantation.

13. Dispositif selon la revendication 10, **caractérisé en ce qu'**il comporte au moins un câble de transmission reliant les récepteurs sismiques (Rk) à l'ensemble d'enregistrement (6).

14. Dispositif selon l'une des revendications 10 à 13, **caractérisé en ce qu'**il comporte des moyens de réception et/ou de transmission de données utilisant une technologie à base de fibres optiques.

15. Dispositif selon l'une des revendications 10 à 14, **caractérisé en ce qu'**il comporte des moyens d'inhibition de plusieurs traces d'enregistrement pour ne sélectionner que des événements sismiques non provoqués par la dite source ou éviter la saturation de l'ensemble d'enregistrement (6).

## Claims

1. A method for automatic classification of events detected on recorded traces corresponding to seismic or acoustic signals picked up by receivers (Rl-Rn) coupled with an underground formation, according to whether said events are purely of seismic or microseismic nature or depend on any account on artifacts linked with an outside environment or with activities of development or monitoring of said underground formation, comprising : - detecting on at least one recorded trace, in a detection range (Pld), signals exceeding a certain threshold (Sd) linked with a detection criterion ;
- selecting a global recording range (Ple) extending beyond either side of said detection range (Pld) ; and - storing the signals of this recording range, **characterized in that** it comprises:
- defining, among all of said recorded traces, detecting traces on which at least one microseismic event detection criterion is defined, by defining an analysis function (E, A) to be applied to said detection range (Pld), said function sending back a value calculated in said detection range (Pld) ;
- detecting a microseismic event when said value of said function (E, A) exceeds said threshold (Sd) ; and
- carrying out said signal storage by associating with each stored trace a classification label defined according to whether the signals that have been detected thereon purely correspond to a seismic or microseismic event or are linked to a certain extent with artifacts.

2. A method as claimed in claim 1, **characterized in that** it comprises applying a detection criterion comprising detecting events on a single recorded trace (Tn) and storing corresponding global recording ranges on several traces.

3. A method as claimed in claim 1, **characterized in that** it comprises applying a detection criterion comprising detecting events on a certain number p (p ≥ 2) of different recorded traces (fn, Tp) if the corresponding detection ranges (Pld) are contained in a predetermined time internal (Plg), by applying the same analysis function, and storing a global recording range of sufficient duration to cover the events, at least-on said p traces.

4. A method as claimed in claim 1, **characterized in that** it comprises applying a detection criterion comprising detecting events on a certain number p (p ≥ 2) of different recorded traces (Tn, Tp) if the corresponding detection ranges (Pld) are contained in a predetermined time interval (Plg), by applying the same analysis function, and storing a global recording range of sufficient duration to cover the events, on a number N of traces greater than number p.

5. A method as claimed in claim 3, **characterized in that** one of said p traces being produced by acquisition of signals due to artifacts, it comprises applying a cancellation criterion comprising classifying the other traces where events are detected in the cancelled traces category and storing them.

6. A method as claimed in any one of the previous claims, **characterized in that** it comprises inhibiting the traces for which the detection time is greater than a predetermined time interval (Pli) and revalidating them later if the value of analysis function (E, A) is below a second threshold in a predetermined reactivation range (Plr).

7. A method as claimed in any one of the previous claims, **characterized in that** the seismic traces obtained by means of seismic or acoustic sensors coupled with the formations surrounding a well through the underground formation are used.

8. A method as claimed in any one of the previous claims, **characterized in that** several detection criteria selected from among all the criteria of a criteria library are used.

9. A method as claimed in any one of the previous claims, **characterized in that** the recorded traces are the signals reflected by the formation in response to the emission in the ground of signals emitted by a seismic source, and **in that** inhibition criteria are used on several traces so as to select only seismic events not caused by said source.

10. A data processing device for automatic classification, according to at least one criterion, of events detected on recorded seismic traces corresponding to signals picked up by seismic or acoustic receivers (Rk) coupled with an underground formation, according to whether the events are purely of microseismic nature or depend on any account on artifacts linked with the outside environment or with activities of development or monitoring of the formation, and for selection of significant trace parts for the purpose of analysis, comprising a seismic trace recording set (6) and a recorded trace processing set, including means for detecting on at least one recorded trace, in a detection range (Pld) and according to at least one detection criterion, signals exceeding a certain threshold, means for selecting at least on said trace a global recording range (Ple) extending beyond either side of detection range (Pld), and means for storing the signals of this recording range, **characterized in that** processing set (7) is suited for :
- defining at least one microseismic event detection criterion on detecting traces selected from among all of said recorded traces, by defining an analysis function (E, A) to be applied to said detection range (Pld), said function sending back a value calculated in said detection range (Pld) ;
- detecting a microseismic event when said value of said function (E, A) exceeds said threshold (Sd) ; and
- storing signals by associating with each stored trace a classification label defined according to whether the signals that have been detected thereon purely correspond to a seismic or microseismic event or are linked to a certain extent with artifacts.

11. A device as claimed in claim 10, **characterized in that** the seismic receivers are hydrophones or geophones or accelerometers distributed in at least one well through the formation.

12. A device as claimed in claim 11, **characterized in that** the seismic receivers are coupled with the formation by a liquid or cement, mechanical coupling means or by magnetization.

13. A device as claimed in claim 10, **characterized in that** it comprises at least one transmission cable connecting seismic receivers (Rk) to recording set (6).

14. A device as claimed in any one of claims 10 to 13, **characterized in that** it comprises data reception and/or transmission means using an optical fiber-based technology.

15. A device as claimed in any one of claims 10 to 14, **characterized in that** it comprises means for inhibiting several recorded traces so as to select only seismic events not caused by said source or to prevent saturation of recording set (6).

## Patentansprüche

1. Verfahren zur automatischen Einstufung von Ereignissen, die in aufgezeichneten Spuren nachgewiesen wurden und seismischen oder akustischen Signalen entsprechen, welche von Rezeptoren (R1 -Rn) empfangen wurden, die mit einer unterirdischen Anordnung gekoppelt sind, und zwar je nachdem, ob die Ereignisse ausschließlich seismischer oder mikroseismischer Beschaffenheit sind oder auf eine beliebige Art und Weise von Artefakten abhängen, die mit einer äußeren Umgebung oder mit Vorgängen zur Nutzung oder zur Überwachung der unterirdischen Formation in Verbindung stehen, aufweisend: - einen Nachweis, in mindestens einer Aufzeichnungsspur über einen Nachweisbereich (Pld), von Signalen, die einen bestimmten Schwellenwert (Sd) überschreiten, welcher mit einem Nachweiskriterium in Verbindung steht; - eine Auswahl eines Gesamtaufzeichnungsbereichs (Ple), der beiderseits über den Nachweisbereich (Pld) hinausgeht; und - eine Speicherung der Signale dieses Aufzeichnungsbereichs, **dadurch gekennzeichnet, dass**:
- aus der Gesamtheit der aufgezeichneten Spuren diejenigen Nachweisspuren bestimmt werden, für welche unter Festlegung einer Analysenfunktion (E, A), die auf den Nachweisbereich (Pld) anzuwenden ist, mindestens ein Kriterium für den Nachweis mikroseismischer Ereignisse bestimmt wird, wobei die Funktion einen Wert ergibt, der für den Nachweisbereich (Pld) berechnet wurde;
- ein mikroseismisches Ereignis nachgewiesen wird, wenn der Wert der Funktion (E, A) den Schwellenwert (Sd) überschreitet; und
- die Speicherung der Signale durchgeführt wird, indem jede der gespeicherten Spuren mit einer Einstufungsmarke in Verbindung gebracht wird, deren Festlegung davon abhängt, ob die Signale, welche darin nachgewiesen wurden, ausschließlich einem seismischen oder mikroseismischen Ereignis entsprechen, oder zu einem gewissen Grade mit Artefakten von Verbindung stehen.

2. Verfahren nach Anspruch 1, **dadurch gekennzeichnet, dass** es die Anwendung eines Nachweiskriteriums aufweist, das den Nachweis von Ereignissen für eine einzige Aufzeichnungsspur (Tn) und die Speicherung von entsprechenden Gesamtaufzeichnungszeiträumen bezüglich mehrerer Spuren umfasst.

3. Verfahren nach Anspruch 1, **dadurch gekennzeichnet, dass** es die Anwendung eines Nachweiskriteriums aufweist, das den Nachweis von Ereignissen in einer bestimmten Anzahl p (p ≥ 2) verschiedener Aufzeichnungsspuren (Tn, Tp) umfasst, wenn die entsprechenden Nachweiszeiträume (Pld) in einem festgelegten Zeitabschnitt (Plg) enthalten sind, durch Anwendung ein- und derselben Analysenfunktion, und die Speicherung eines Gesamtaufzeichnungsbereichs, der ausreichend lange dauert, um die Ereignisse mindestens für die p Spuren abzudecken.

4. Verfahren nach Anspruch 1, **dadurch gekennzeichnet, dass** es die Anwendung eines Nachweiskriteriums aufweist, das den Nachweis von Ereignissen in einer bestimmten Anzahl p (p ≥ 2) verschiedener Aufzeichnungsspuren (Tn, Tp) umfasst, wenn die entsprechenden Nachweiszeiträume (Pld) in einem festgelegten Zeitabschnitt (Plg) enthalten sind, durch Anwendung ein- und derselben Analysenfunktion, und die Speicherung eines Gesamtaufzeichnungsbereichs, der ausreichend lange dauert, um die Ereignisse für eine Anzahl N an Spuren, die größer als die Anzahl p ist, abzudecken.

5. Verfahren nach Anspruch 3, **dadurch gekennzeichnet, dass** es, sobald eine der p Spuren, durch Aufzeichnung von Signalen erzeugt wurde, die auf Artefakte zurückzuführen sind, die Anwendung eines Abbruchkriteriums aufweist, welches die Einstufung der anderen Spuren, bei denen Ereignisse nachgewiesen werden, in die Kategorie der abgebrochenen Spuren sowie deren Speicherung umfasst.

6. Verfahren nach einem der vorhergehenden Ansprüche, **dadurch gekennzeichnet, dass** es die Hemmung der Spuren, für welche die Nachweisdauer ein festgelegtes Zeitintervall (Pli) übersteigt, aufweist sowie deren spätere Neuzulassung, wenn der Wert der Analysenfunktion (E, A) niedriger als ein zweiter Schwellenwert auf in einem festgelegten Reaktivierungsbereich (Plr) ist

7. Verfahren nach einem der vorhergehenden Ansprüche, **dadurch gekennzeichnet, dass** seismische Spuren verwendet werden, die mittels seismischer oder akustischer Sensoren erhalten wurden, welche mit den Formationen gekoppelt sind, die einen Schacht umgeben, der durch die unterirdische Formation verläuft.

8. Verfahren nach einem der vorhergehenden Ansprüche, **dadurch gekennzeichnet, dass** mehrere Nachweiskriterien zur Anwendung kommen, die aus der Gesamtheit der Kriterien einer Kriteriendatenbank ausgewählt sind.

9. Verfahren nach einem der vorhergehenden Ansprüche, **dadurch gekennzeichnet, dass** es sich bei den aufgezeichneten Spuren um die Signale handelt, welche als Antwort auf die Signale, welche eine seismischen Quelle in Boden sendet, von der Formation zurückgeworfen werden, und dass bezüglich mehrerer Spuren Hemmkriterien zur Anwendung kommen, um nur diejenigen seismischen Ereignisse auszuwählen, welche nicht von der Quelle hervorgerufen wurden.

10. Vorrichtung zur Verarbeitung von Daten, um Ereignisse, die in aufgezeichneten seismischen Spuren nachgewiesen wurden und die Signalen entsprechen, welche von seismischen oder akustischen Rezeptoren (Rk) empfangen wurden, die mit einer unterirdischen Formation gekoppelt sind, automatisch gemäß mindestens eines Kriteriums einzustufen, und zwar je nachdem, ob die Ereignisse ausschließlich mikroseismischer Beschaffenheit sind oder auf eine beliebige Art und Weise von Artefakten abhängen, die mit einer äußeren Umgebung oder mit Vorgängen zur Nutzung oder zur Überwachung der unterirdischen Formation in Verbindung stehen, und um signifikante Spurenabschnitte zu Zwecken der Analyse auszuwählen, aufweisend eine Einheit (6) zum Aufzeichnen seismischer Spuren und eine Einheit zur Verarbeitung der aufgezeichneten Spuren, einschließlich Mitteln zum Nachweis mindestens einer Aufzeichnungsspur während eines Nachweisfensters (Pld) und gemäß mindestens eines Nachweiskriteriums, wobei die Signale einen bestimmten Schwellenwert überschreiten, Mitteln zur Auswahl, mindestens in dieser Spur, eines Gesamtaufzeichnungsbereichs (Ple), der beiderseits über den Nachweisbereich (Pld) hinausgeht, und Mitteln zur Speicherung der Signale dieses Aufzeichnungsbereichs, **dadurch gekennzeichnet, dass** die Verarbeitungseinheit (7) dazu geeignet ist:
- mindestens ein Nachweiskriterium für mikroseismische Ereignisse in den Nachweisspuren festzulegen, welche aus der Gesamtheit der aufgezeichneten Spuren ausgewählt wurden, indem eine Analysenfunktion (E, A) festgelegt wird, die auf den Nachweisbereich (Pld) anzuwenden ist, wobei die Funktion einen Wert ergibt, der für den Nachweisbereich (Pld) berechnet wurde;
- ein mikroseismisches Ereignis nachzuweisen, wenn der Wert der Funktion (E, A) den Schwellenwert (Sd) überschreitet; und
- die Signale zu speichern, indem jede der gespeicherten Spuren mit einer Einstufungsmarke in Verbindung gebracht wird, deren Festlegung davon abhängt, ob die Signale, welche darin nachgewiesen wurden, ausschließlich einem seismischen oder mikroseismischen Ereignis entsprechen, oder zu einem gewissen Grade mit Artefakten von Verbindung stehen.

11. Vorrichtung nach Anspruch 10, **dadurch gekennzeichnet, dass** es sich bei den seismischen Rezeptoren um Hydrophone, Geophone oder Beschleunigungsmesser handelt, die in mindestens einem Schacht verteilt sind, welcher durch die Formation verläuft.

12. Vorrichtung nach Anspruch 11, **dadurch gekennzeichnet, dass** die seismischen Rezeptoren durch eine Flüssigkeit oder Zement, mechanische Kupplungsmittel oder durch Magnetisierung mit der Formation gekoppelt sind.

13. Vorrichtung nach Anspruch 10, **dadurch gekennzeichnet, dass** sie mindestens ein Übertragungskabel aufweist, das die seismischen Rezeptoren (Rk) mit der Aufzeichnungsgesamteinheit (6) verbindet.

14. Vorrichtung nach einem der Ansprüche 10 bis 13, **dadurch gekennzeichnet, dass** sie Mittel zum Empfang und/oder zur Übertragung aufweist, die eine Technologie auf Basis von Lichtwellenleitern verwenden.

15. Vorrichtung nach einem der Ansprüche 10 bis 14, **dadurch gekennzeichnet, dass** sie Mittel zur Hemmung mehrerer Aufzeichnungsspuren aufweist, sodass nur seismische Ereignisse ausgewählt werden, die nicht von der Quelle hervorgerufen werden, oder eine Sättigung der Aufzeichnungseinheit (6) vermieden wird.
